Europäisches Patentamt

European Patent Office

Office européen des brevets

(11) Publication number: **0 386 785 B1**

# EUROPEAN PATENT SPECIFICATION

(45) Date of publication of patent specification: **08.06.94**

(51) Int. Cl.⁵: **H04N 9/68**, H04N 9/73, H04N 9/07

(21) Application number: **90104539.3**

(22) Date of filing: **09.03.90**

(54) **Gain adjuster for color camera of sequential system.**

(30) Priority: **10.03.89 JP 59454/89**

(43) Date of publication of application:
**12.09.90 Bulletin 90/37**

(45) Publication of the grant of the patent:
**08.06.94 Bulletin 94/23**

(84) Designated Contracting States:
**DE FR GB**

(56) References cited:
GB-A- 2 029 142
US-A- 3 710 014

(73) Proprietor: **NIKON CORPORATION**
**2-3, Marunouchi 3-chome**
**Chiyoda-ku**
**Tokyo(JP)**

(72) Inventor: **Hashimoto, Takaaki**
**411-76, Mitsubori**
**Noda-shi, Chiba-ken(JP)**
Inventor: **Nakagawa, Yasunobu**
**9-2-318,Gontazaka 3-chome,**
**Hodogaya-ku**
**Yokohama-shi, Kanagawa-ken(JP)**
Inventor: **Shibazaki, Kiyoshige**

**Mezonhowaito 202,**
**13-10 Matsunoki 1-chome**
**Suginami-ku, Tokyo(JP)**
Inventor: **Nitta, Keiichi**
**Kenkoryo 926,**
**Chitose,**
**Takatsu-ku**
**Kawasaki-shi, Kanagawa-ken(JP)**
Inventor: **Yamashita, Junya**
**Shukoryo,**
**27-4 Enokigaoka,**
**Midori-ku**
**Yokohama-shi, Kanagawa-ken(JP)**
Inventor: **Hidari, Hirofumi**
**103 Oshanburizu mansion**
**43,Kashimada,Saiwai-ku**
**Kawasaki-shi, Kanagawa-ken(JP)**

(74) Representative: **Blumbach Weser Bergen**
**Kramer Zwirner Hoffmann Patentanwälte**
**Radeckestrasse 43**
**D-81245 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

This invention relates to the use of a gain adjuster for a color camera of sequential system which outputs image signals including color signals R, G and B sequentially in time-division.

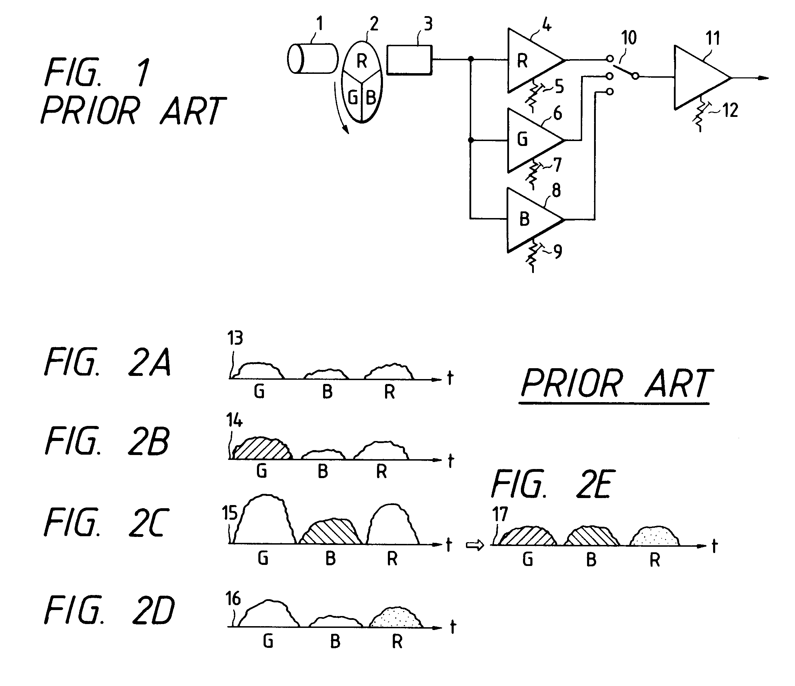

A conventional gain adjuster for a color camera of sequential system is shown in Figure 1 of the accompanying drawings.

In Figure 1, a light passed through a photo-taking lens 1 passes through a color separating filter 2 rotated at a constant speed and is imaged on the light receiving surface of an image pick-up device 3. The color separating filter 2 is rotated in synchronism with the vertical synchronous signal of television, and accordingly the image signal from the image pick-up device 3 becomes a frame color sequential signal 13 from which color signals G, B and R are sequentially output for each frame of television, as shown in Figure 2A of the accompanying drawings.

In order to control white balance by such a color camera of sequential system, as shown in Figure 1, heretofore, gain adjusting circuits 4, 6 and 8 have been independently provided for respective ones of color signals R, G and B, and inherent amplification gains depending on the color temperature of the location of photographing have been set for respective ones of the color signals by variable resistors 5, 7 and 9, thereby obtaining signals 14, 15 and 16 shown in Figures 2B - 2D of the accompanying drawings resulting from amplifying the image signal 13 from the image pick-up device 3 shown in Figure 2A by different gains. The outputs of the gain adjusting circuits 4, 6 and 8 are changed over for each frame by a switch 10 in accordance with the order of outputting of the color signals R, G and B, and become a signal 17 shown in Figure 2E of the accompanying drawings. The signal 17 from the change-over switch 10 is finally subjected to general level adjustment by an amplifier 11 whose amplification gain is set by a variable resistor 12, whereafter it is output.

In such a prior-art gain adjuster for a color camera of sequential system, however, gain adjustment has been effected individually for each of the color signals R, G and B in spite of the fact that the signals handled therein are the signals of a time-serially single system and therefore, an amount of circuit three times as great has been required and further, wide-band amplifiers of three systems have been provided adjacent to one another, and this has also led to a problem that mutual interference is caused and stability is not good.

GB-A-2 029 142 discloses a gain adjuster specifically used to compensate for transmission losses. The gain adjuster comprises a group of resistors as gain setting elements each provided with a switch for selectively parallel-connecting the resistance within the group of resistors. The resistor group is connected to one input of a differential amplifier receiving the input signal to be amplified by a gain determined by the combination of resistors. The switches are actuated by digital signals supplied by a digital control unit.

The object of the present invention is to provide a gain adjuster for a color camera of sequential system in which the scale of circuit can be reduced and at the same time, stability can be improved.

The present invention refers to the use of a specific gain adjuster according to claim 1 for a color camera.

The present invention uses a gain adjuster for such a color camera of sequential system which is provided with a group of gain setting elements the number of which corresponds to the number of bits contained in a digital control signal controlling said gain setting elements each of which having a value corresponding to the bit weighting of a digital signal; a group of switches provided with a plurality of analog switches for selectively parallel-connecting the, gain setting elements of said group of gain setting elements; an amplifying circuit for amplifying an image signal from said image pick-up unit by the combined gain of said gain setting elements selectively connected by said group of switches; and a digital control unit for outputting to said group of switches said digital control signal corresponding to an amplification gain fit for each of color signals R, G and B output from said image pick-up unit, in synchronism with said color signals, and time-division-controlling the amplification gain.

In the gain adjuster for a color camera of sequential system signals of the three primary colors R, G and B sequentially output at a frame unit can be amplified by a single system of circuit in accordance with the amplification gain inherent to each color signal to thereby control white balance appropriately, and the scale of the circuit can be greatly reduced and only one wide-band amplifier is required and therefore, there is no destruction of stability caused by mutual interference when a plurality of wide-band amplifiers are disposed adjacent to one another.

Also, the gain is determined by the selective parallel-connection of the bit-weighted gain setting element group by the switch group and therefore, analog gain control is possible directly by the digital signal, and the scale of the circuit can be made small correspondingly to there being no necessity of converting the digital signal into an analog control signal by a D/A converter.

Figure 1 shows the construction of an apparatus according to the prior art.

Figures 2A to 2E show the waveforms of the operational signals of the prior-art apparatus.

Figure 3 shows the construction of an embodiment of the present invention.

Figures 4A to 4C show the waveforms of the operational signals of the Figure 3 embodiment.

Figure 5 shows that one full rotation of a filter 2 corresponds to nine fields.

Figure 6 is a flow chart of a microcomputer 26.

Figure 7 is a flow chart showing the interrupting operation of a keyboard 31.

Figure 8 is a circuit diagram of a specific embodiment of the gain adjusting circuit of Figure 3.

Figure 9 is an equivalent circuit diagram of the grounded-base connection of Figure 8.

Figure 10 is a circuit diagram of an embodiment of an analog switch used in the present invention.

## DESCRIPTION OF THE PREFERRED EMBODIMENTS

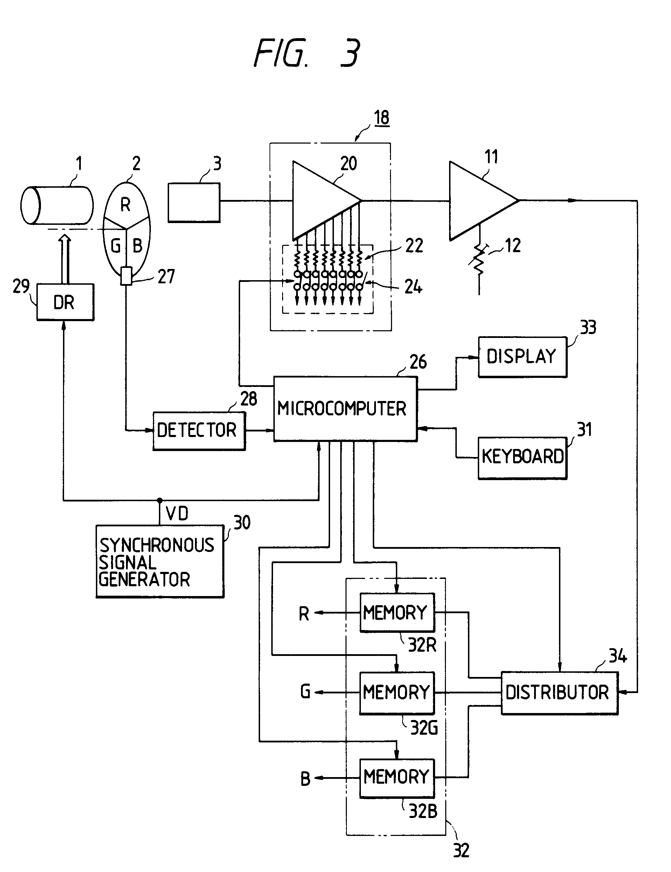

Figure 3 shows the construction of an embodiment of the present invention.

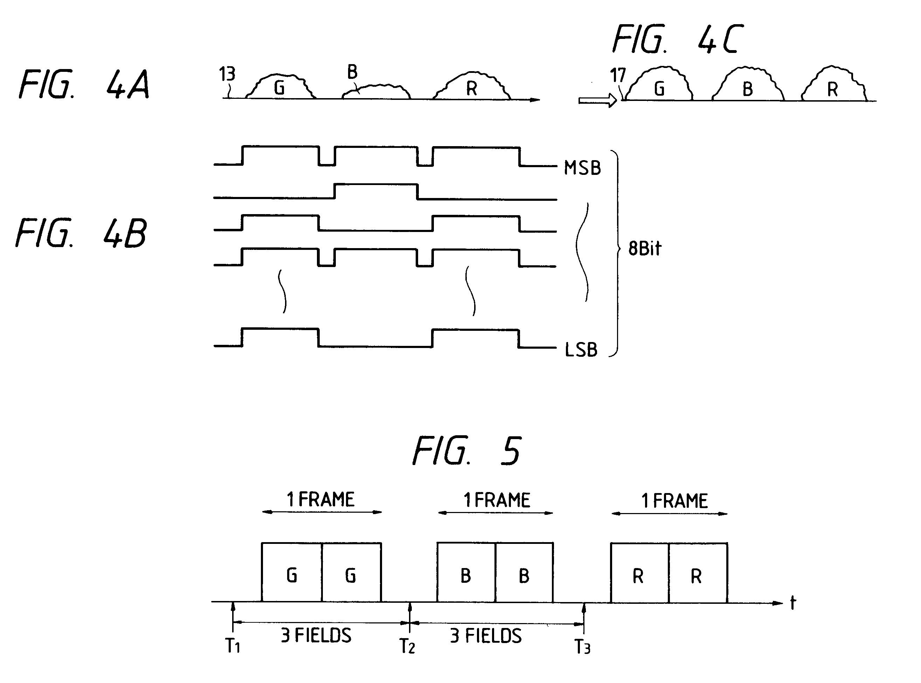

In Figure 3, the reference numeral 1 designates an image pick-up lens, and a light passed through the image pick-up lens 1 passes through a color separating filter 2 and is image-picked up by an image pick-up device 3. The color separating filter 2 is provided with filters for R, G and B and is rotated in synchronism with the vertical synchronous signal of television. Therefore, color images corresponding to the filters for R, G and B are picked up by the image pick-up device 3. Accordingly, from the image pick-up device 3, there is provided a frame color sequential signal 13 from which color signals are output, for example, in the order of G, B and R, for each frame of television as shown in Figure 4A.

The frame color sequential signal 13 from the image pick-up device 3 is input to a gain adjusting circuit 18.

A wide-band amplifier 20 is provided in the gain adjusting circuit 18, and a group of gain setting elements 22 and a group of switches 24 are provided to control the amplification gain of the wide-band amplifier 20.

Constant current source elements, resistor elements, etc. are conceivable as the gain setting elements, but for simplicity, the present embodiment will hereinafter be described with respect to resistor elements.

The group of gain setting elements, i.e., the group of resistor elements 22, is comprised of a plurality of resistor elements having a resistance value corresponding to the bit weighting of a digital signal for gain control provided from a microcomputer 26 as a digital control unit which will be described later, and in this embodiment, an 8-bit digital signal is taken as an example and therefore, the group of resistor elements 22 is comprised of eight resistor elements corresponding to the bit number.

The group of switches 24 comprises analog switches connected to the resistor elements of the group of resistor elements 22. Each analog switch of the group of switches 24 is ON-OFF-controlled in conformity with each corresponding bit of the digital signal from the microcomputer 26, i.e., the 8-bit digital signal, and the resistor elements of the group of resistor elements 22 are selectively parallel-connected by the closing of the switches so that the amplification gain of the wide-band amplifier 20 can be determined in conformity with the combined resistance value (the parallel resistance value) of the group of resistor elements 22 selectively connected by the group of switches 24.

A digital signal for gain control is provided from the microcomputer 26 as the digital control unit to the group of switches 24 provided in the gain adjusting circuit 18. The change-over information of color signals R, G and B of each frame by the rotation of the color separating filter 2 and amplification gain information for controlling the white balance of each of the color signals R, G and B predetermined in conformity with the color temperature of the location of photographing are provided to the microcomputer 26. Therefore, the microcomputer 26 changes over and outputs to the group of switches 24 of the gain adjusting circuit 18 digital signals for amplification gain control conforming to the color signals G, B and R of the frame color sequential signal 13 shown in Figure 4A which is sequentially output from the image pick-up device 3 for each frame, and time-division-controls the amplification gain of the wide-band amplifier 20.

The output signal 17 from the wide-band amplifier 20 provided in the gain adjusting circuit 18 is input to an amplifier 11, whereby it is subjected to amplification conforming to the amplification gain for effecting the general level adjustment of a signal already subjected to gain adjustment for taking white balance by a variable resistor 12 and is finally output.

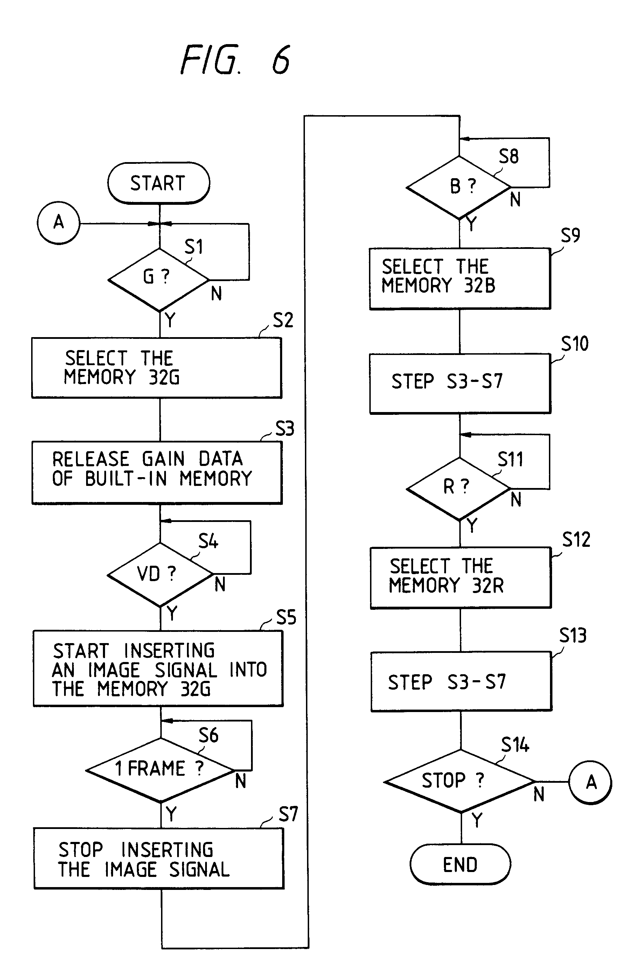

A plurality of slits are formed in the marginal portion of the filter 2, and a photointerrupter 27 outputs a signal conforming to the rotation of the filter 2, and a position detector 28 outputs to the microcomputer 26 a signal conforming to the rotated position of the filter 2 in accordance with the signal of the photointerrupter 27. A driver 29 rotates the filter 2 in synchronism with a vertical synchronous signal VD from a synchronous signal generator 30 so that as shown in Figure 5, one full rotation of the filter may correspond to nine fields.

A keyboard 31 is operated to store the data of the gains of the color signals R, G and B in the built-in memory 32 of the microcomputer 26, and a display device 33 displays the values of the gains input by the keyboard 31.

The camera of the present embodiment is a still picture color video camera, and memories 32R, 32G and 32B store therein digital signals corresponding to one frame of respective ones of the color signals R, G and B. A distributor 34 converts the output of the amplifier 11 into a digital signal, and stores the digital signal in the memories 32R, 32G and 32B in the group of memories 32 selected by the microcomputer 26.

In the flow chart of Figure 6, at step S1, the microcomputer 26 reads the output of the position detector 28 and judges whether the boundary between G and B of the filter 2 is positioned on the front face of the image pick-up device 3. At a point of time whereat the boundary between G and B is positioned on the front face of the image pick-up device 3 (this point of time corresponds to T1 in Figure 5), shift is made to step S2. At the step S2, 8-bit gain data corresponding to the color signal G is read out from the built-in memory 32, and the read-out gain data is output to the group of switches 24. At step S4, the microcomputer 26 judges whether the vertical synchronous signal VD has been generated from the synchronous signal generator 30, and when the vertical synchronous signal VD is generated, shift is made to step S5, where the distributor 34 causes a digital image signal to be written into the memory 32G. At step S6, whether an image signal corresponding to two fields, i.e., one frame, has been output is judged. This judgment is done either by detecting the lapse time from the vertical synchronous signal VD of the step S4 by a timer, or by detecting that the vertical synchronous signal VD has been generated twice since the generation of the vertical synchronous signal VD of the step S4. If the judgment at the step S6 is YES, at step S7, the writing-in of the digital image signal is stopped.

At step S8, the output of the position detector 28 is read, and whether the boundary between B and R of the filter 2 is positioned on the front face of the image pick-up device 3 is judged. At a point of time whereat the boundary between B and R is positioned on the front face of the image pick-up device 3 (this point of time corresponds to T2 in Figure 5), shift is made to step S9. At the step S9, 8-bit gain data corresponding to the color signal B is read out from the built-in memory 32, and the read-out gain data is output to the group of switches 24. At step S10, the same operations as the aforedescribed steps S3 - S7 are performed. However, the image signal corresponding to one frame here is written into memory 32B.

At step S11, the output of the position detector 28 is read, and whether the boundary between R and G of the filter 2 is positioned on the front face of the image pick-up device 3 is judged. At a point of time whereat the boundary between R and G is positioned on the front face of the image pick-up device 3 (this point of time corresponds to T3 in Figure 5), shift is made to step S12. At the step S12, 8-bit gain data corresponding to the color signal R is read out from the built-in memory 32, and the read-out gain data is output to the group of switches 24. At step S13, the same operations as the aforedescribed steps S3 - S7 are performed. However, the digital image signal corresponding to one frame here is written into memory 32R. At step S14, whether the stop button of the keyboard 31 has been operated is judged.

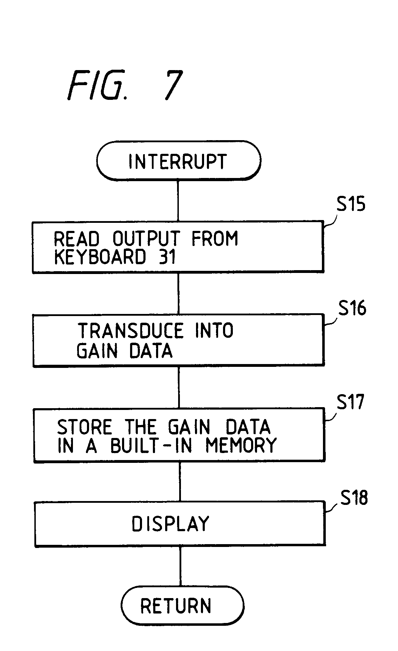

The flow chart of Figure 7 causes to interrupt the operation of the flow chart of Figure 6 in response to the operation of the gain data setting command button of the keyboard 31. At step S15, the microcomputer 26 reads the output of the keyboard 31, and at step S16, converts the output of the keyboard 31 into gain data, and at step S17, stores the converted data in the built-in memory 32, and at step S18, causes the display device 33 to display the stored gain data.

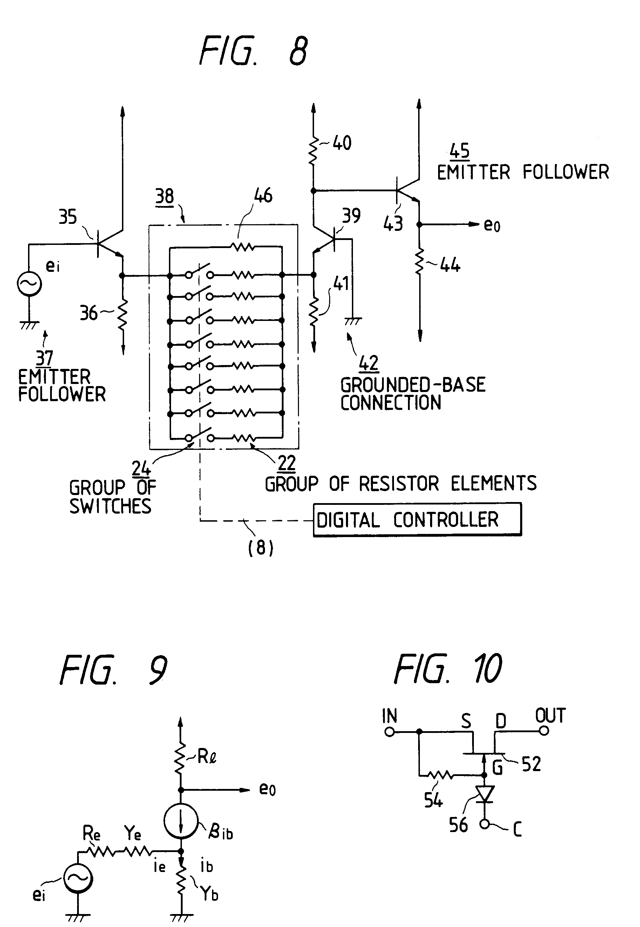

Figure 8 is a circuit diagram showing the specific circuit construction of the gain adjusting circuit 18 in the embodiment of Figure 3.

In Figure 8, the wide-band amplifier 20 is provided at its input stage with an emitter follower circuit 37 comprising a transistor 35 and a resistor 36, and a variable resistor circuit 38 provided with a group of resistor elements 22 and a group of switches 24 is connected to the emitter follower circuit 37, and a grounded-base connection 42 provided with a transistor 39 and resistors 40 and 41 is provided subsequently to the variable resistor circuit 38, and an emitter follower circuit 45 provided with a transistor 43 and a resistor 44 is provided at the last output stage.

Since as shown in Figure 3, the control by the 8-bit digital signal from the microcomputer 26 is taken as an example, the group of resistor elements 22 and the group of switches 24 provided in the variable resistor circuit 38 have eight parallel-connected circuits comprising resistor elements and analog switches connected in series between the emitter follower circuit 37 at the input stage and the grounded-base connection 42 at the output stage side.

The resistance values of the eight resistors in the group of resistor elements 22 connected in series to the analog switches in the group of switches 24 are set so that the voltage gain Av may vary correspondingly to the bit weighting of the 8-bit digital signal, i.e., $2^7$, $2^6$, $2^5$, $2^4$, $2^3$, $2^2$, $2^1$ and $2^0$. A resistor 46 directly connecting the input and the output together which is provided in the variable resistor circuit 38 determines the reference gain of the wide-band amplifier 20, and gain setting by the resistor 46 is fixedly effected even when all the analog switches are OFF.

The voltage gain Av by the gain control circuit of Figure 8 will now be described.

In Figure 9 which shows the equivalent circuit of the grounded-base connection 42 shown in Figure 8, Rℓ designates a load resistor, Re denotes an input gain setting resistor, Ye designates an emitter resistor within a transistor, Yb denotes a base resistor within the transistor, $\beta$ib designates a constant current source by the transistor, $\beta$ denotes a current amplification rate at the emitter of the transistor, and ib designates the base current of the transistor.

The voltage gain Av of the grounded-base connection 42 shown in the equivalent circuit of Figure 9 is determined by

$$Av = R\ell/\{Yb + \beta(Ye + Re)\},$$

and is given by

$$Av \simeq R\ell/Re$$

when the current amplification rate $\beta$ is sufficiently great. That is, the voltage gain Av of the grounded-base connection 42 is determined by the ratio of Rℓ to the input gain setting resistance Re, and in the embodiment of Figure 9, the value of the input gain setting resistance Re is varied by the variable resistor circuit 38 to thereby adjust the voltage gain Av.

Specifically, the resistance values of the group of resistor elements 22 can be set so that the voltage gain Av may be 0.1dB, 0.2dB, 0.4dB, 0.8dB, 1.6dB, 3.2dB, 6.4dB and 12.8dB to 8-bit digital signals b0 - b7, respectively.

Referring to Figure 10 which shows a specific example of the analog switches constituting the group of switches 24 provided in the variable resistor circuit 38 of Figure 8, FET 52 is used as the switch element, a source S is a switch input IN, a drain D is a switch output OUT, and further a resistor 54 is connected between a gate G and the source S, and a diode 56 is connected between the gate G and a control terminal C with the gate G side thereof as the anode.

The analog switch using the FET 52 shown in Figure 10 is closed in response to a control voltage (H level signal) to the control terminal C which is the gate-source voltage Vsg = 0 volt of FET 52, while it is opened by a control voltage (L level signal) for which the gate-source voltage Vsg becomes a predetermined minus voltage being applied to the control terminal C.

The operation of the embodiment of Figure 3 will now be described with reference to the signal waveform graphs of Figures 4A - 4C.

First, for the microcomputer 26, gain information for controlling white balance to each of the color signals R, G and B in conformity with the color temperature of the location of photographing is set. This gain setting to the color signals R, G and B in conformity with the color temperature may be manual setting by the operator, or automatic setting by automatically detecting the color temperature of the location of photographing.

When photographing by the color camera of sequential system is started, the light from the photo-taking lens 1 passes through the color separating filter 2 rotated in synchronism with the vertical synchronous signal, and color images corresponding to the color filters for R, G and B are successively formed on the light receiving surface of the image pick-up device 3. As a result, a frame color sequential signal 13 from which color signals are output, for example, in the order of G, B and R as shown in Figure 4A is obtained from the image pick-up device 3.

The frame color sequential signal 13 from the image pick-up device 3 is input to the wide-band amplifier 20 of the gain adjusting circuit 18, whereby it is amplified in accordance with the amplification gain which is then being set.

At this time, the microcomputer 26 outputs to the group of switches 24 an 8-bit digital gain control signal conforming to a preset gain as shown in Figure 4B in synchronism with each of the color signals G, B and R from the image pick-up device 3. For example, when the color signal G is input, the digital gain control signal is set to [1011, ... 1], and when the color signal B is then input, the digital gain control signal is set to [1101, ... 1], and when the color signal R is further input, the digital gain control signal is set to [1011, ... 1].

In accordance with such a digital gain control signal from the microcomputer 26, the switch in the group of switches 24 which corresponds, for example, at bit 1 is closed and the switch in the group of switches 24 which corresponds at bit 0 is opened, and the voltage gain Av of the grounded-base connection 42 is determined as shown in Figure 8 in accordance with the combined resistance of the resistors in the group of resistor elements 22 which have been selected by the switch which has been closed, i.e., the parallel resistance value, and is subjected to the amplification by the amplification gains inherent to the color signals G, B and R, whereby there is obtained a frame color sequential signal 17 subjected to the amplification for white balance as shown in Figure 4C.

The frame color sequential signal 17 output from the gain adjusting circuit 18 is then subjected to general level adjustment by the amplifier 11 in accordance with the gain by the variable resistor 12 and is output.

While in the above-described embodiment, the case where the gain adjusting circuit 18 is gain-controlled by the 8-bit digital signal by the microcomputer 26 has been taken as an example, the present invention is not restricted thereto, but of course, design may be made such that gain adjustment can be accomplished by a digital signal of a suitable bit number such as 4 bits or 16 bits.

As hitherto described, according to the present invention, the wide-band amplifier for controlling the gain is required in only one system and therefore the circuit construction can be simplified, and the wide-band amplifier may be single and therefore, there is no adverse effect by mutual interference and thus, high stability can be ensured.

Also, if the digital signal for gain control is controlled by the microcomputer or the like, not only the time-division control for white balance, but also general control and further, gain control complicated in terms of system such as individual color corrections can be accomplished relatively simply.

## Claims

1. Use of a gain adjuster for a color camera of sequential system which outputs from an image pick-up unit (1, 2, 3) an image signal sequentially including three kinds of color signals for each frame, said three kinds of color signals time-division-controlling the amplification gain of said gain adjuster (18), the latter including:
   - a group of gain setting elements (22) the number of which corresponds to the number of bits contained in a digital control signal controlling said gain setting elements (22) each of which having a value corresponding to the bit weighting of said digital control signal,
   - a group of switches (24) provided with a plurality of analog switches for selectively parallel-connecting the gain setting elements (22) in said group of gain setting elements (22),
   - an amplifying circuit (20) for amplifying the image signal from said image pick-up unit (1, 2, 3) by the combined gain of said group of gain setting elements (22) selectively connected together by said group of switches (24), and
   - a digital control unit (26) for outputting to said group of switches (24) said digital control signal corresponding to an amplification gain fit for each of said color signals in synchronism with the three kinds of color signals output from said image pick-up unit (1, 2, 3) and time-division-controlling the amplification gain.

2. The use of a gain adjuster according to claim 1, wherein said gain setting elements are resistor elements (22).

3. The use of a gain adjuster according to claim 1, further including:
   - a group of memory devices (32R, 32B, 32G) corresponding to respective ones of the three kinds of color signals,
   - level adjusting means (11, 12) for effecting the general level adjustment of the signal output from said amplifying circuit (20), and
   - a distributor (34) for converting the output from said level adjusting means (11, 12) into a digital signal, and storing it in said group of memory devices (32R, 32B, 32G).

## Patentansprüche

1. Verwendung einer Verstärkungseinstelleinrichtung für eine Sequentialsystem-Farbkamera, die aus einer Bildaufnahmeeinheit (1, 2, 3) ein Bildsignal, das für jedes Einzelbild sequentiell drei Arten von Farbsignalen enthält, ausgibt, wobei durch die drei Arten von Farbsignalen eine Zeitmultiplexsteuerung des Verstärkungsgrades der Verstärkungseinstelleinrichtung (18) ausgeführt wird und letztere umfaßt:
   - eine Gruppe Verstärkungseinstellungselemente (22), deren Anzahl der Anzahl der in einem digitalen Steuersignal, das die Verstärkungseinstellungselemente (22) steuert, enthaltenen Bits entspricht, und die einen Wert gemäß der Bitgewichtung des digitalen Steuersignals haben,
   - eine Gruppe Schalter (24), die zum selektiven Parallelschalten der Verstärkungseinstellungselemente (22) in der Gruppe der Verstärkungseinstellungselemente (22) mit einer Vielzahl von Analogschaltern versehen ist,
   - eine Verstärkungsschaltung (20) zur Verstärkung des Bildsignals aus der Bildaufnahmeeinheit (1, 2, 3) durch die kombinierte Verstärkung der Gruppe der Verstärkungseinstellungselemente (22), die selektiv durch die Gruppe der Schalter (24) zusammengeschaltet sind, und

- eine digital Steuereinheit (26) zur Ausgabe des digitalen Steuersignals an die Gruppe der Schalter (24) entsprechend einer Verstärkungsgrad-Anpassung für jedes der Farbsignale in Synchronismus mit den drei von der Bildaufnahmeeinheit (1, 2, 3) ausgegebenen Arten von Farbsignalen zur Zeitmultiplexsteuerung des Verstärkungsgrades.

2. Verwendung einer Verstärkungseinstelleinrichtung nach Anspruch 1, worin die Verstärkungseinstellungselemente Widerstandelemente (22) sind.

3. Verwendung einer Verstärkungseinstelleinrichtung nach Anspruch 1, die weiter umfaßt
   - eine Gruppe Speichereinrichtungen (32R, 32B, 32G), die der jeweiligen drei Arten von Farbsignalen entspricht,
   - Pegeleinstelleinrichtungen (11, 12) zur gewöhnlichen Einpegelung des Ausgangssignals von der Verstärkerschaltung (20), und
   - einen Verteiler (34) zur Umwandlung des Ausgangssignals von den Pegeleinstelleinrichtungen (11, 12) in ein digitales Signal, und zur Speicherung desselben in der Gruppe der Speichereinrichtungen (32R, 32B, 32G).

**Revendications**

1. Utilisation d'un dispositif de réglage du gain pour une caméra couleur d'un système séquentiel qui délivre à partir d'une unité (1, 2, 3) de prise de vues un signal d'image comprenant séquentiellement trois types de signaux de couleur pour chaque trame, lesdits trois types de signaux de couleur commandant en répartition temporelle le gain d'amplification dudit dispositif (18) de réglage du gain, ce dernier comprenant:
   - un groupe d'éléments (22) de réglage du gain dont le nombre correspond au nombre de bits contenus dans un signal numérique de commande commandant lesdits éléments (22) de réglage du gain ayant chacun une valeur correspondant au poids binaire dudit signal de commande numérique,
   - un groupe d'interrupteurs (24) comportant une pluralité d'interrupteurs analogiques pour relier sélectivement en parallèle les éléments (22) de réglage du gain dans ledit groupe d'éléments (22) de réglage du gain,

   - un circuit (20) d'amplification pour amplifier le signal d'image en provenance de l'unité (1, 2, 3) de prise de vues par le gain combiné dudit groupe d'éléments (22) de réglage du gain reliés sélectivement ensemble par ledit groupe d'interrupteurs (24), et
   - une unité (26) de commande numérique pour délivrer audit groupe d'interrupteurs (24) ledit signal de commande numérique correspondant à un gain d'amplification adapté à chacun desdits signaux de couleur en synchronisme avec les trois types de signaux de couleur délivrés par ladite unité (1, 2, 3) de prise de vues et commandant en répartition temporelle le gain d'amplification.

2. Utilisation d'un dispositif de réglage du gain selon la revendication 1, dans laquelle lesdits éléments de réglage du gain sont des éléments (22) de résistance.

3. Utilisation d'un dispositif de réglage du gain selon la revendication 1, comportant en outre:
   - un groupe de dispositifs (32R, 32B, 32G) à mémoire correspondant aux trois types respectifs de signaux de couleur,
   - des moyens (11, 12) de réglage de niveau pour effectuer le réglage général du niveau de la sortie du signal du circuit (20) d'amplification, et
   - un dispositif de répartition (34) pour convertir la sortie desdits moyens (11, 12) de réglage du niveau en un signal numérique, et la stocker dans ledit groupe de dispositifs (32R, 32B, 32G) de mémoire.

FIG. 1
PRIOR ART

FIG. 2A

FIG. 2B

FIG. 2C

FIG. 2D

FIG. 2E

PRIOR ART

# FIG. 3

FIG. 4A

FIG. 4B

FIG. 4C

MSB

8Bit

LSB

FIG. 5

1 FRAME 1 FRAME 1 FRAME

G G B B R R

$T_1$ 3 FIELDS $T_2$ 3 FIELDS $T_3$

t

EP 0 386 785 B1

# FIG. 6

START

A

S1
G ?
N
Y

S2
SELECT THE
MEMORY 32G

S3
RELEASE GAIN DATA
OF BUILT-IN MEMORY

S4
VD ?
N
Y

S5
START INSERTING
AN IMAGE SIGNAL INTO
THE MEMORY 32G

S6
1 FRAME ?
N
Y

S7
STOP INSERTING
THE IMAGE SIGNAL

S8
B ?
N
Y

S9
SELECT THE
MEMORY 32B

S10
STEP S3-S7

S11
R ?
N
Y

S12
SELECT THE
MEMORY 32R

S13
STEP S3-S7

S14
STOP ?
N
A
Y

END

## FIG. 7

```
                   ┌──────────────────┐
                   │    INTERRUPT     │
                   └──────────────────┘
                            │
                                                    S15
        ┌──────────────────────────────┐
        │  READ OUTPUT FROM            │
        │  KEYBOARD 31                 │
        └──────────────────────────────┘
                            │
                                                    S16
        ┌──────────────────────────────┐
        │     TRANSDUCE INTO           │
        │     GAIN DATA                │
        └──────────────────────────────┘
                            │
                                                    S17
        ┌──────────────────────────────┐
        │  STORE THE GAIN DATA         │
        │  IN A BUILT-IN MEMORY        │
        └──────────────────────────────┘
                            │
                                                    S18
        ┌──────────────────────────────┐
        │          DISPLAY             │
        └──────────────────────────────┘
                            │
                   ┌──────────────────┐
                   │      RETURN      │
                   └──────────────────┘
```

FIG. 8

FIG. 9

FIG. 10